Europäisches Patentamt

European Patent Office

Office européen des brevets

(19)

(11) Publication number: **0 146 472 B1**

(12) **EUROPEAN PATENT SPECIFICATION**

(45) Date of publication of patent specification: **11.03.92**   (51) Int. Cl.5: **H04N 1/10**

(21) Application number: **84402573.4**

(22) Date of filing: **13.12.84**

(54) Image input apparatus.

(30) Priority: **19.12.83 JP 239409/83**
         **01.11.84 JP 230888/84**

(43) Date of publication of application:
**26.06.85 Bulletin 85/26**

(45) Publication of the grant of the patent:
**11.03.92 Bulletin 92/11**

(84) Designated Contracting States:
**AT DE FR GB IT**

(56) References cited:
**WO-A-83/04160**
**GB-A- 1 196 386**
**US-A- 3 993 865**
**US-A- 4 278 999**

**PATENT ABSTRACTS OF JAPAN, vol. 6, no. 67 (E-104)[945], 28th April 1982; & JP-A-57 9164**

**PATENT ABSTRACTS OF JAPAN, vol. 6, no. 64 (E-103)[942], 23rd April 1982; & JP-A-57 4652**

(73) Proprietor: **SONY CORPORATION**
**7-35 Kitashinagawa 6-Chome Shinagawa-ku Tokyo 141(JP)**

(72) Inventor: **Kusaka, Satoshi**
**c/o Sony Corporation 7-35, Kitashinagawa 6-chome**
**Shinagawa-ku Tokyo(JP)**

(74) Representative: **Descourtieux, Philippe et al**
**CABINET BEAU de LOMENIE 55 rue d'Amsterdam**
**F-75008 Paris(FR)**

Rank Xerox (UK) Business Services

EP 0 146 472 B1

## Description

BACKGROUND OF THE INVENTION

Field of the Invention:

This invention relates to an image input apparatus.

Description of the Prior Art:

Facsimile apparatus, plane paper copier, diazotype copier or the like are well known as image input apparatus.

Any of these prior art image input apparatus has drawbacks that it is difficult to selectively input a small portion of image and the shape is large and undesired for portability. As a hand-held type input apparatus, there is an optical scanner disclosed in U.S. patent specification US-A-3,541,248. In this optical scanner, image information cannot be read out accurately if the scanning speed is reduced during the input of the image. In addition, it takes some time before the voltage of a power source rises to a predetermined level from the instant of closure of a power source switch immediately before use. Therefore, immediately after the power source switch is turned on, the brightness of the light source is below a predetermined necessary level, so that normal operation cannot be obtained. Further, the optical scanner noted in U.S.P does not have any memory means, so that the input image signal has to be instantly processed to produce its hard copy.

Another prior art device, from which the present invention proceeds, is known under US patent specification US-A-3 993 865. This document discloses a hand-held scanning device of the kind set out in the preamble of claim 1 which further includes a store which is organised to allow new array scans to be written in at a variable rate dependent on hand motion while the contents of the store are read out repetitively and non-destructively at a constant line by line rate suitable for a TV raster.

SUMMARY OF THE INVENTION

An object of the present invention is to provide a novel image input apparatus, with which a small portion of an image can be readily selectively input, and which is small in size, easy to operate and can be conveniently carried along.

Another object of the present invention is to provide an image input apparatus, which comprises means for writing read-out image information in a compressed form in a memory to thereby permit input of a greater amount of image, and which is thus suited for use with a memory having a small storage capacity such as a semiconductor card.

With this end in view, the apparatus according to the invention, of the kind described in the preamble of claim 1, is characterized in that means are provided for selectively passing a pulse from one of said pulse generators when a plurality of pulses are provided from said one pulse generator during the pulse cycle period of the other pulse generator, the image information signal from said line sensor being thereby stored in a compressed form in said memory means.

Advantageously, such an image input apparatus further comprises means for detecting the brightness of light from a light source and means for releasing the lock of a running roller when a predetermined level is reached by the brightness being detected, thereby permitting input of only proper image information without input of defective image information due to insufficient light quantity.

The above-mentioned and other objects and features of the invention will become apparent from the following detailed description taken in conjunction with the drawings which indicate embodiments of the invention.

BRIEF DESCRIPTION OF THE DRAWINGS

Fig. 1 is a block diagram showing an image signal processing system in an embodiment of the image input apparatus according to the present invention;

Fig. 2 is a schematic perspective view illustrating the way of use of the same embodiment of the image input apparatus;

Fig. 3 is a schematic exploded perspective view showing the internal construction of the same image input apparatus;

Fig. 4 is a schematic plan view of the same image input apparatus;

Fig. 5 is a schematic side view showing the same image input apparatus;

Fig. 6 is a graph showing an embodiment of rising characteristic of a linear light source;

Fig. 7 is a schematic representation of a roller control system;

Fig. 8 is a graph showing the output of a comparator in the roller control system;

Fig. 9 is a time chart illustrating the operation of the image signal processing system shown in Fig. 1;

Fig. 10 is a graph showing the image compression ratio plotted against the scanning speed of the embodiment of the image input apparatus; and

Fig. 11 is a schematic perspective view showing a different embodiment of the image input apparatus according to the present invention.

## DESCRIPTION OF THE PREFERRED EMBODIMENTS

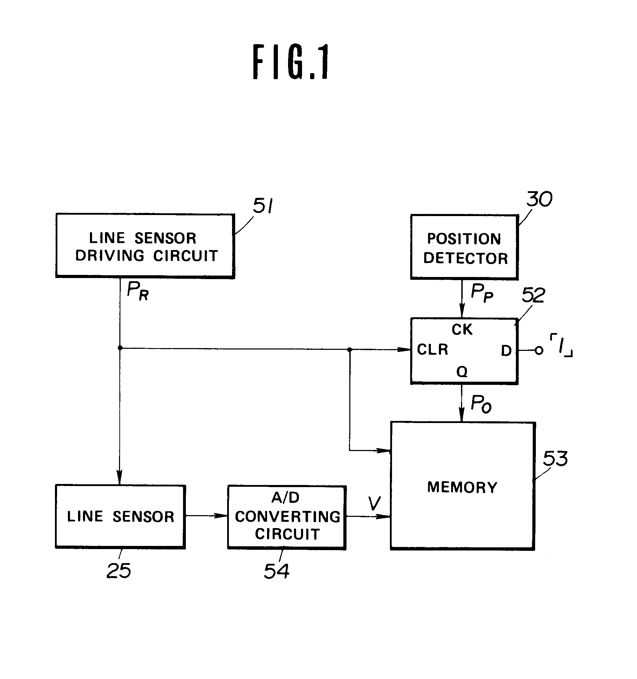

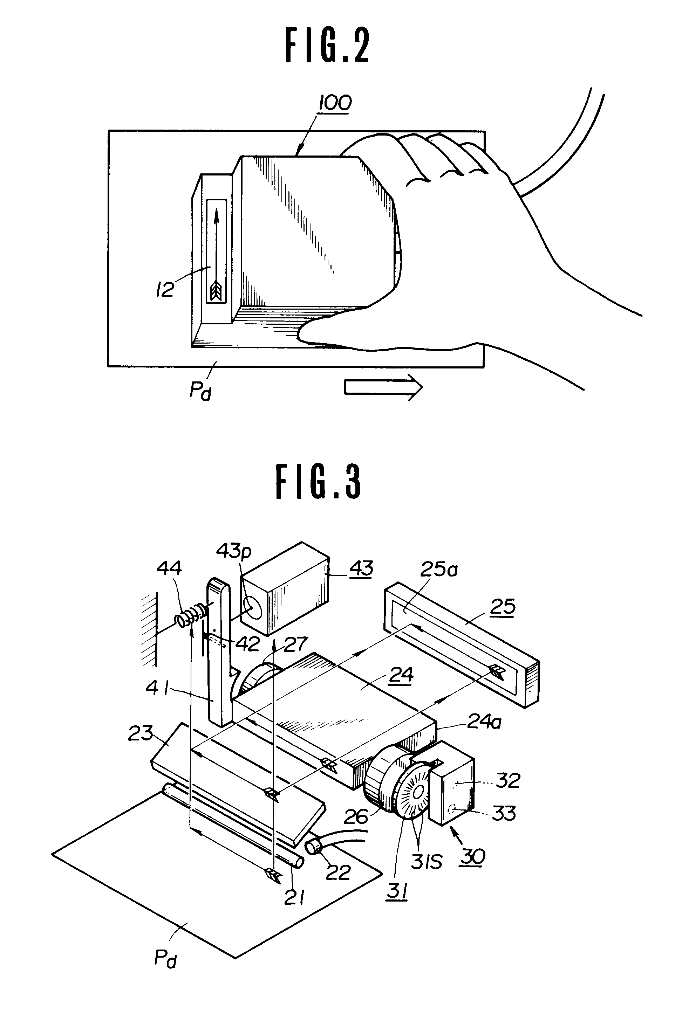

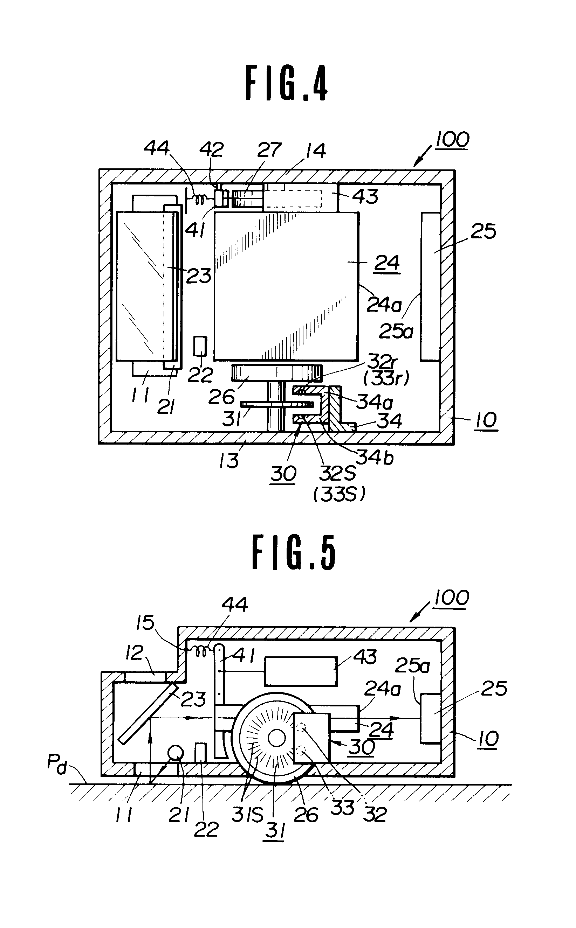

Fig. 1 is a block diagram showing an image signal processing system of one embodiment of the image input apparatus according to the present invention. The system of Fig. 1 will be described later in detail, and an embodiment of the image input apparatus 100 according to the present invention will be described with reference to Figs. 2 through 5.

The image input apparatus 100 has a casing 10 having an opening 11 provided at the bottom. A linear light source 21, which may be a tungsten lamp or a light-emitting diode, is accommodated in the casing 10 near the opening 11 for illuminating a surface Pd bearing an image to be input. A light-receiving element 22 for detecting the intensity of light of the linear light source 21 is also accommodated in the casing 10. A half mirror 23 is provided on top of the opening 11. Light entering the casing 10 through the opening 11 is partly transmitted and partly reflected by the half mirror 23 to reach a window 12 provided on top of the casing 10 and also a rod lens array 24 accommodated in the casing 10. The light reaching the window 12 permits the user to input image while confirming it with the eyes. The rod lens array 24 consists of distributed refractive index type lenses (with a diameter of 1 to 2 mm) arranged in a plate-like array such that the refractive index increases toward the center. The optical axis of the rod lens array 24 extends in the horizontal direction. Light from the rod lens array 24 is incident on a CCD line sensor (hereinafter referred to as line sensor) 25 having a light incidence surface 25a facing an end face 24a of the rod lens array 24. The surface Pd bearing an image to be input is illuminated by the linear light source 21 provided near the opening 11, and the image is focused in the same scale on the light incidence surface 25a of the line sensor 25 through the half mirror 23 and rod lens array 24.

Rollers 26 and 27 are rotatably supported in lower portions of opposite side walls 13 and 14 of the casing 10. The image input apparatus 100 can be moved over the surface Pd for scanning.

A position detector 30, which consists of an optical rotary encoder, includes a rotary detection slit disk 31 rotatable in unison with the roller 26 and two rotation detectors 32 and 33, each of which consists of facing elements facing each other on the opposite sides of the slit disk 31.

The slit disk 31 has a number of transparent slits 31s provided along the edge at a uniform interval. The rotation detectors 32 and 33 consist of respective light-emitting elements 32s and 33s and light-receiving elements 32r and 33r. They are provided on facing inner sides of pair arms 34a and 34b of a holder 34 secured to the side wall 13 of the casing 10, the slit disk 31 intervening between the arms 34a and 34b. They make an angle of $n\theta + \theta/4$ degrees ($\theta$ being the angular pitch of the slits 31s and n being n = 0, 1, 2, ...) with respect to the axis of rotation of the slit disk 31. With the two rotation sensors 32 and 33 arranged in the above way, it is possible to detect the direction of rotation of the slit disk 31 as is well known in the art.

The rotation of the roller 27 is controlled by a brake member 41, which has a rotary shaft 42 projecting substantially from its longitudinal center and rotatably mounted in the side wall 14 of the casing 10. A solenoid 43 secured to the side wall 14 has a plunger 43p, which is coupled to an upper portion of the brake member 41 above the rotary shaft 42. The brake member 41 is spring biased by a spring 44 having one end tied to its top and the other end tied to a wall portion 15 of the casing 10.

A microswitch (not shown) is provided in an interlocked relation to the shaft of the roller 27 as means for rendering the image input apparatus 100 operative. When the image input apparatus 100 is placed on the surface Pd bearing the image to be input by holding its with a hand, the microswitch noted above is closed by the pressure exerted between the image input apparatus 100 and surface Pd, thus rendering operative the linear light source 21, line sensor 25 or the like.

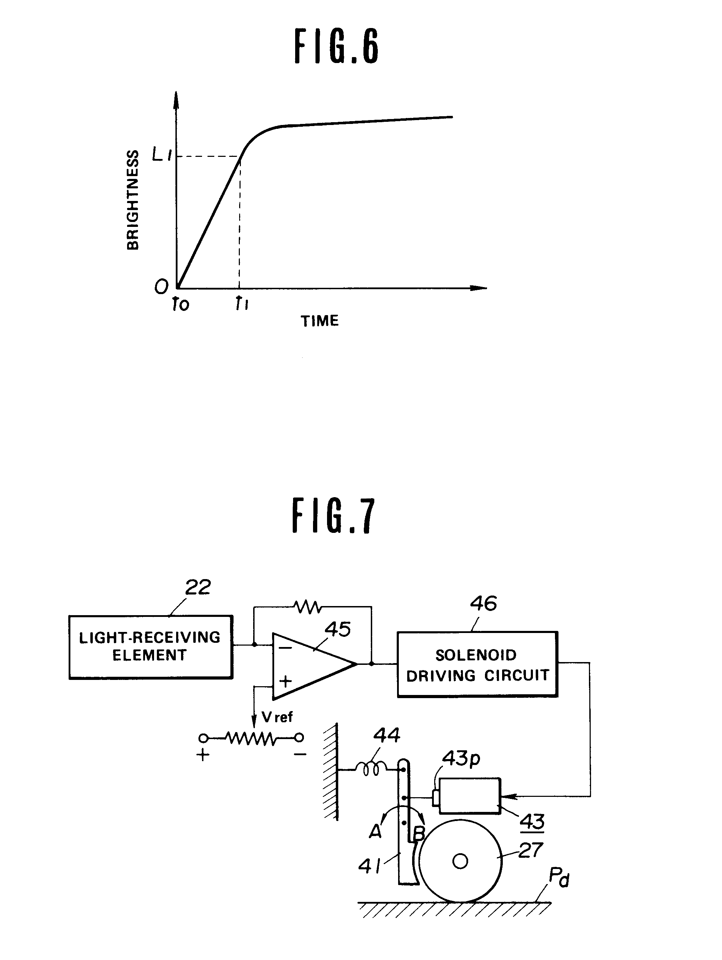

The linear light source 21 has a rising characteristic as shown in Fig. 6. As is shown, its light intensity or brightness reaches a predetermined level $L_1$ required for operation at an instant $t_1$ after the lapse of a certain period of time $t_1$-$t_0$ (e.g., 0.2 to 0.3 second) from the instant to of its closure. Therefore, if the input of the image is started before the instant $t_1$ of reaching of the predetermined brightness $L_1$, defective input image information results from insufficient quantity of light. Accordingly, with the image input apparatus 100 the roller 27 is held locked by the brake member 41 so that the apparatus 100 cannot be moved along the surface Pd until the brightness of the linear light source 21 reaches the predetermined level $L_1$. The light-receiving element 22, which detects the brightness of the linear light source provided near the opening 11, is connected to an inverted input terminal of a comparator 45, with a reference voltage $V_{ref}$ applied to a non-inverted input terminal thereof. The output terminal of the comparator 45 is connected to a solenoid driving circuit 46 for driving the solenoid 43. The reference voltage $V_{ref}$ applied to the comparator 45 is set such that the output of the comparator 45 is inverted from a low level to a high level at the instant $t_1$ of reaching of the predetermined brightness level

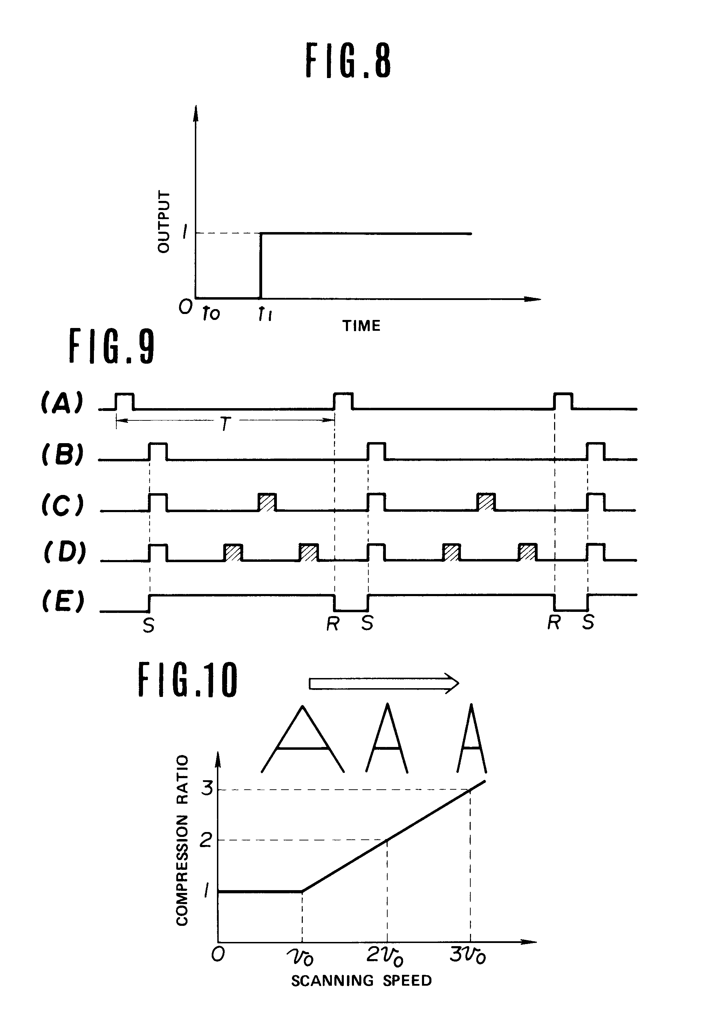

$L_1$, as shown in Fig. 8.

With this arrangement, during the period from the instant $t_0$ when the linear light source 21 is turned on till the instant $t_1$ the output of the comparator 45 is held at the low level, and during this time the solenoid 43 is thus not driven by the solenoid driving circuit 46. During this time, the roller 27 is thus held locked by the brake member 41 biased by the spring 44 in the direction of arrow A. At the instant $t_1$ when the predetermined brightness level $L_1$ is reached by the brightness of the linear light source 21, the output of the comparator 45 is inverted to the high level, whereupon the solenoid 43 is driven by the solenoid driving circuit 46 to turn the brake member 41 in the direction of arrow B so as to release the roller 27 from the locked state. After the instant $t_1$ the brightness level of the linear light source 21 is above $L_1$, so that the roller 27 remains released from the lock.

With the provision of the above roller control system, it is possible to avoid the input of defective image information due to insufficient quantity of light and permit only normal image information.

Instead of detecting the brightness of the linear light source 21 with the light-receiving element 22, it is also possible to control the operation of the brake member 41 in response to the output of a timer including a counter for counting time. Further, the output of the comparator 45 may be used to control an image signal processing system as described hereinunder as well as the operation of the brake member 41.

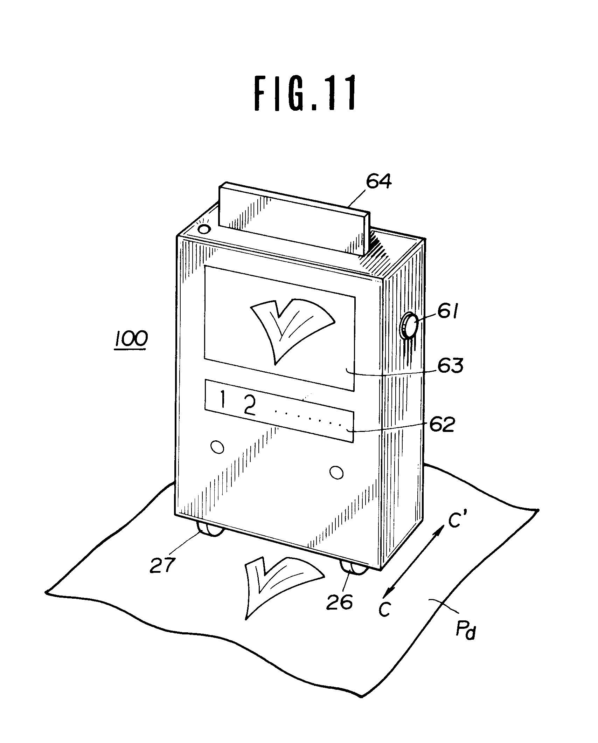

The image signal that is obtained from the line sensor 25 is processed in a manner as described hereinunder. As shown in Fig. 1, the line sensor 25 is driven in response to a reset pulse signal $P_R$ having a cycle period T provided from a line sensor driving circuit 51. The reset pulse signal $P_R$ from the line sensor driving circuit 51 is fed to a clear terminal CLR of a D flip-flop 52 and also to a memory 53. The memory 53 may be a magnetic disk or a magnetic tape. As a further alternative, it may be a semiconductor card 64 as shown in different embodiment of Fig. 11 to be described later. In the embodiment of Fig. 2, the memory 53 is provided outside the image input apparatus 100. A position detection pulse signal $P_P$ is fed from the position detector 30 noted above to a clock input terminal CK of the D flip-flop 52, and data "1" is fed to a data input terminal D of the flip-flop. The image signal obtained from the line sensor 25 is converted by an analog-to-digital (A/D) converter 54 into a digital signal, which is written as image data V in the memory 53. The write address of the memory 53 at this time is determined by the reset pulse signal $P_R$ and an output pulse signal $P_0$ from an output terminal Q of the D flip-flop 52. The "row" of the address is determined by the reset pulse signal $P_R$, and the "column" of the address is determined by the output pulse signal $P_0$. One unit $V_{mn}$ of image data is stored in one address $A_{mn}$. The resolution in this case is 7 to 10 units of data per mm.

The operation will now be described in greater detail with reference to the time chart of Fig. 9. The reset pulse signal $P_R$ has a fixed cycle period T as shown in (A). On the other hand, the number of position detection pulse signals $P_P$ provided from the position detector 30 during the period T varies according to the speed of manual scanning of the image input apparatus 100 as shown in (B) to (D). In the cases (C) and (D), the scanning speed is respectively $2v_0$ and $3v_0$ where $v_0$ is the scanning speed in the case (B).

The D flip-flop 52, which is receiving data "1" fed to the data input terminal D at all time, is set by the position detection pulse signal $P_P$ and reset by a reset pulse signal $P_R$. Thus, in either of the cases of the scanning speeds $v_0$, $2v_0$ and $3v_0$, the pulses shown shaded are removed. The output pulse signal $P_0$ is as shown in (E). It is to be understood that in the image data V stored in the memory 53 at the scanning speed $v_0$, at the scanning speed $2v_0$ one unit of data among two units of image data V is ignored, and at the speed of $3v_0$ two of three data are ignored.

In other words, when the scanning speed is 0 to $v_0$, the compression ratio of the image to be input is fixed at 1, while when the scanning speed is $v_0$ to $3v_0$ the compression ratio is varied linearly from 1 to 3, whereby the image data V is written in the memory 53, as shown in Fig. 10. To write a character "A" as input image with the scanning direction as shown by arrow in Fig. 10, the character "A" written in the memory 53 is compressed laterally to one-half when the scanning speed is $2v_0$ and to one-third when the scanning speed is $3v_0$ compared to when the scanning speed is 0 to $v_0$.

With the image signal processing system as described above, it is possible to input image with a compression ratio of unity, i.e., without compression, by moving the image input apparatus 100 at a scanning speed in a range of 0 to $v_0$, while inputting an image, which is not so important and can be sufficiently recognized with a reduced number of image data units, by compressing it by moving the image input apparatus 100 at an increased speed such that the scanning speed is above $v_0$. By so doing, more image can be input, which is desirable in case where the memory 53 has a small storage capacity such as the semiconductor card 64 in the different embodiment of the present invention shown in Fig. 11.

If it is possible to vary the image compression ratio by providing an N-step counter (or 1/N frequency divider) between the position detector 30 and D flip-flop 52. Further, by omitting the D flip-flop 52, the image compression ratio may be fixed at N irrespective of the scanning speed.

The procedure of use and operation of this embodiment of the image input apparatus 100 will now be described.

When the image input apparatus 100 is placed on the surface Pd bearing an image to be input by holding it with a hand, as shown in Fig. 2, the microswitch (not shown) is closed by the pressure exerted between the image input apparatus 100 and surface Pd so that the operation of the image input apparatus 100 is started. Until the brightness of the linear light source 21 reaches the predetermined level $L_1$, the roller 27 is held locked by the brake member 41 as mentioned before, so that the image input apparatus 100 cannot be moved along the surface Pd. Thus, the input of defective image signal can be prevented. When the brightness of the linear light source 21 reaches the predetermined level $L_1$, the solenoid 43 is driven to release the lock of the roller 27 by the brake member 41. As a result, an image index signal is generated, and at the same time a reset pulse signal $P_R$ is generated from the line sensor driving circuit 51, whereby the image right beneath the opening 11 is read in the line sensor 25. As the image input apparatus 100 is moved manually along the surface Pd at a scanning speed in a range of 0 to $v_0$, for instance, the rollers 26 and 27 and slit disk 31 are rotated with this movement. When the first slit is brought to a position between the light-emitting element 32s and light-receiving element 32r of the rotation detector 32 with the rotation of the slit disk 31, a detection pulse signal $P_P$ is generated. By this position detection pulse signal $P_P$ the column of the corresponding address of the memory 53 is determined, and the "row" of the address is determined by the reset pulse signal $P_R$, whereby image data $V_1$ of a linear surface first read in the first address (i.e., first unit of data) is written in the memory 53. Meanwhile, with the movement of the image input apparatus 100, image of a second linear surface adjacent to the first linear surface is focused on the light incidence surface 25a of the line sensor 25 to be read in. When the slit is brought to a position between the light-emitting element 33s and light-receiving element 33r of the rotation detector 33 with further movement of the image input apparatus 100, a second position detection pulse signal $P_P$ is generated, whereby a second unit data $V_2$ is read out from the line sensor 25 and written in the second address of the memory 53. At the same time, a third linear surface is read in. Like operation is performed every time the image input apparatus 100 is moved by a distance corresponding to the pitch of the slits 31s.

The image input apparatus 100 normally may be moved at a low speed so that the scanning speed is in a range of 0 to $v_0$, while it may be moved at a high speed so that the scanning speed is higher than $v_0$ when inputting an image, which is not so important and can be sufficiently recognized even with a reduced number of data units.

Further, in case when the direction of movement of the image input apparatus 100 is reversed while image is being input at a scanning speed within the range of 0 to $v_0$, the reversal of direction is detected by the co-operation of the two rotation detectors 32 and 33, whereby a reverse movement detection signal is generated. The reverse movement detection signal is fed to the memory 53, whereby data that has been written in the memory 53 is erased progressively from the end every time the position detection pulse signal $P_P$ is fed from the position detector 30. For example, when the image input apparatus 100 is moved backwards to an extent corresponding to n data units after N data units have been input, (N - n) units of data remain in the memory 53, and the image input apparatus 100 at this time is at a position to input the (N - n + 1)th unit of data. When the image input apparatus 100 is subsequently moved again forwards for n units of data, N units of data recovered in the memory 53. In this way, data before and after the reversal of direction of movement can be continuously input without possibility of overlap or jump-out of data.

When the image input apparatus 100 is separated from the surface Pd after required data has been input, the pressure on the roller 27 is removed to open the microswitch (not shown), whereby an end signal is written at the end of the input image signal. Then, the image input apparatus 100 is rendered inoperative.

Image corresponding to the image data written in the memory 53 may be reproduced on an image display unit such as a cathode-ray tube by mounting the memory 53 in a suitable reading apparatus. Also, its hard copy may be obtained with a separately provided printer.

A different embodiment of the present invention will now be described with reference to Fig. 11.

Referring to Fig. 11, reference numeral 61 designates a knob of a control switch (power switch). The image input apparatus 100 is rendered operative when the control switch is closed by the knob 61. More specifically, at this time the illumination light source is turned on, an index signal of the input image is generated, and the read-in memory address is set. Further, the residual memory capacity is displayed on a display unit 62 to prevent the error of the input image due to overflow of the image data. The display unit 62 may be switched for the display of the remaining battery life so that failure of operation due to battery which can no longer supply power can be prevented. Reference numeral 63 designates an image display unit, which comprises liquid crystal or a flat cathode-ray tube as a display element and can suitably display image data recorded on the semiconductor card 64.

Desired image may be input by manually moving the apparatus along surface Pd in the direction of arrow C or C'. When the control switch is opened by operating the knob 61 after the input of image is completed, an end signal is written at the end of the input image in the line sensor 25, thus bringing an end to the image input.

As has been described in the foregoing, according to the present invention, small portion of a selective image can be input by leading light of the light source after reflection by that portion of the original to the line sensor which is controlled by the position detecting means. In addition, only detection pulses from the position detecting means that are provided during one cycle period of the control pulse signal from the line sensor driving circuit are rendered effective, and an output pulse is formed on the basis of these effective pulses. For each output pulse, an image signal is provided from the line sensor and written in the memory. Further, the lock of the roller noted above is released when upon reaching of a predetermined brightness level by the detected brightness of the light source.

**Claims**

1. An image input apparatus comprising :

    a housing (10);

    a light source (21) provided within said housing for illuminating an object surface (Pd);

    a roller (26, 27) rotatably supported by said housing so as to contact with said object surface;

    position detecting means (30) operatively coupled with said roller for detecting a rotation thereof;

    a line sensor (25) provided within said housing for reading image information of said object surface according to light provided from said light source and reflected by said image information surface;

    a line sensor driving circuit (51) for driving said line sensor; and

    memory means (53) for storing a first output signal (V) from said line sensor in accordance with a second output signal (Po) from said position detecting means representing the position of image information signal stored in said memory means,

    wherein said line sensor driving circuit (51) is a first pulse generator for generating control pulses ($P_R$), said position detecting means (30) is a second pulse generator for generating pulses ($P_P$) according to the rotation of said roller,

    characterized in that means are provided for selectively passing a pulse from one of said pulse generators when a plurality of pulses ($P_P$) are provided from said one pulse generator (30) during the pulse cycle period (T) of the other pulse generator (51), the image information signal (V) from said line sensor being thereby stored in a compressed form in said memory means (53).

2. The image input apparatus according to claim 1, wherein said pulse passing means comprise a flip-flop (52) set by a pulse ($P_P$) from said position detecting means (30) and reset by a pulse ($P_R$) from said line sensor driving circuit (51).

3. The image input apparatus according to claim 2, wherein the output (Po) of said flip-flop (52) determines the column or row of image information signal stored in said memory means (53), and said pulse ($P_R$) from said line sensor driving circuit (51) determines the row or column of said image information signal.

4. The image input apparatus according to claim 2 or 3, wherein a 1/N frequency divider is provided between said position detecting means (30) and said flip-flop (52).

5. The image input apparatus according to any one of claims 1 to 4, wherein said position detecting means comprises detecting means (31, 32, 33) for detecting the rotation sense of said roller.

6. The image input apparatus according to claim 5, wherein said position detecting means includes a slit disk (31) mounted on the shaft of said roller and a pair of rotation detectors (32, 33).

7. The image input apparatus according to any one of claims 1 to 6, wherein light provided from said light source (21) and reflected by said image information surface (Pd) is focused onto said line sensor (25) through a lens array (24).

8. The image input apparatus according to any one of claims 1 to 7, wherein it further comprises braking means (41) for locking said roller (27).

9. The image input apparatus according to claim 8, wherein it further comprises light receiving means (22) for detecting the brightness of light from said light source (21), and means (43) for releasing said braking means at the time the output of said light receiving means equal to a predetermined value.

10. The image input apparatus according to any one of claims 1 to 9, wherein said memory means is a memory card (64).

11. The image input apparatus according to any one of claims 1 to 10, wherein it further comprises a monitor means (63) for displaying information of said image information surface being input.

**Revendications**

1. Appareil de saisie d'image, comprenant :

   un boîtier (10) ;

   une source lumineuse (21) disposée à l'intérieur dudit boîtier et servant à éclairer la surface (Pd) d'un objet ;

   une roulette (26, 27) montée rotative sur ledit boîtier de façon à pouvoir être en contact avec ladite surface de l'objet ;

   un moyen de détection de position (30) fonctionnellement couplé avec ladite roulette et servant à détecter la rotation de cette dernière ;

   un capteur de ligne (25) disposé à l'intérieur dudit boîtier et servant à lire l'information d'image de ladite surface de l'objet en fonction de la lumière produite par ladite source lumineuse et réfléchie par ladite surface d'information d'image ;

   un circuit d'excitation de capteur de ligne (51) servant à exciter ledit capteur de ligne ; et

   un moyen de mémorisation (53) servant à emmagasiner un premier signal de sortie (V) dudit capteur de ligne en fonction d'un deuxième signal de sortie ($P_o$) venant dudit moyen de détection de position et représentant la position du signal d'information d'image emmagasiné dans ledit moyen de mémorisation,

   où ledit circuit d'excitation de capteur de ligne (51) est un premier générateur d'impulsions servant à produire des impulsions de commande ($P_R$), et ledit moyen de détection de position (30) est un deuxième générateur d'impulsions servant à produire des impulsions ($P_P$) en relation avec la rotation de ladite roulette,

   caractérisé en ce qu'un moyen est prévu pour laisser sélectivement passer une impulsion venant d'un desdits générateurs d'impulsions lorsque plusieurs impulsions ($P_P$) sont produites par ce générateur d'impulsions (30) pendant la durée de cycle d'impulsions (T) de l'autre générateur d'impulsions (51) le signal d'information d'image (V) qui vient dudit capteur de ligne étant ainsi emmagasiné sous forme comprimée dans ledit moyen de mémorisation (53).

2. Appareil de saisie d'image selon la revendication 1, où ledit moyen qui laisse passer les impulsions comprend une bascule (52) positionnée par une impulsion ($P_P$) venant dudit moyen de détection de position (30) et repositionnée par une impulsion ($P_R$) venant dudit circuit d'excitation de capteur de ligne (51).

3. Appareil de saisie d'image selon la revendication 2, où le signal de sortie ($P_0$) de ladite bascule (52) détermine la colonne ou la rangée du signal d'information d'image emmagasiné dans ledit moyen de mémorisation (53), et ladite impulsion ($P_R$) venant dudit circuit d'excitation de capteur de ligne (51) détermine la rangée ou la colonne dudit signal d'information d'image.

4. Appareil de saisie d'image selon la revendication 2 ou 3, où un diviseur de fréquence par 1/N est placé entre ledit moyen de détection de position (30) et ladite bascule (52).

5. Appareil de saisie d'image selon l'une quelconque des revendications 1 à 4, où ledit moyen de détection de position comprend un moyen de détection (31, 32, 33) servant à détecter le sens de rotation de ladite roulette.

6. Appareil de saisie d'image selon la revendication 5, où ledit moyen de détection de position comporte un disque à fentes (31) monté sur l'arbre de ladite roulette et une paire de détecteurs de rotation (32, 33).

7. Appareil de saisie d'image selon l'une quelconque des revendications 1 à 6, où la lumière produite par ladite source lumineuse (21) et réfléchie par ladite surface d'information d'image (Pd) est focalisée sur ledit capteur de ligne (25) par l'intermédiaire d'un réseau de lentilles (24).

8. Appareil de saisie d'image selon l'une quelconque des revendications 1 à 7, où celui-ci comprend en outre un moyen de freinage (41) servant à bloquer ladite roulette (27).

9. Appareil de saisie d'image selon la revendication 8, où celui-ci comprend en outre un moyen de réception de lumière (22) servant à déterminer l'intensité de la lumière venant de ladite source lumineuse (21), et un moyen (43) servant à relâcher ledit moyen de freinage au moment où le signal de sortie dudit moyen de réception de lumière est égal à une valeur prédéterminée.

10. Appareil de saisie d'image selon l'une quelconque des revendications 1 à 9, où ledit moyen de mémorisation est une carte de mémorisation (64).

11. Appareil de saisie d'image selon l'une quelconque des revendications 1 à 10, où celui-ci comprend en outre un moyen du type écran de contrôle (63) qui sert à afficher l'information de ladite surface d'information d'image qui est en train d'être saisie.

**Patentansprüche**

1. Bildeingabegerät, das enthält:
   ein Gehäuse (10);
   eine Lichtquelle (21), die im Gehäuse vorgesehen ist, um eine Gegenstandsfläche (Pd) zu beleuchten;
   eine Walze (26, 27), die im Gehäuse drehbar so gelagert ist, daß sie die Gegenstandsfläche berührt;
   eine Lageabtasteinrichtung (30), die mit der Walze betriebsmäßig gekuppelt ist, um deren Drehung abzutasten;
   einen Zeilenabtaster (25), der im Gehäuse vorgesehen ist, um eine Bildinformation der Gegenstandsfläche in Übereinstimmung mit dem Licht auszulesen, das von der Lichtquelle stammt und von der Bildinformationsfläche reflektiert wurde;
   eine Zeilenabtaster-Ansteuerstufe (51), um den Zeilenabtaster anzusteuern;
   und
   eine Speicherstufe (53), um ein erstes Ausgangssignal (V) des Zeilenabtasters in Übereinstimmung mit einem zweiten Ausgangssignal (Po) der Lageabtasteinrichtung zu speichern, das die Lage eines Bildinformationssignals kennzeichnet, das in der Speicherstufe gespeichert ist,
   wobei die Zeilenabtaster-Ansteuerstufe (51) aus einem ersten Impulsgenerator besteht, um Steuerimpulse ($P_R$) zu erzeugen, wobei die Lageabtasteinrichtung (30) aus einem zweiten Impulsgenerator besteht, um in Übereinstimmung mit der Walzendrehung Impulse ($P_P$) zu erzeugen,
   dadurch gekennzeichnet, daß eine Einrichtung vorgesehen ist, um wahlweise einen Impuls von einem der Impulsgeneratoren durchzulassen, wenn eine Vielzahl von Impulsen ($P_P$) von diesem einen Impulsgenerator (30) während des Impulsintervalls (T) des anderen Impulsgenerators (51) geliefert wird, wodurch das Bildinformationssignal (V) vom Zeilenabtaster in komprimierter Form in der Speicherstufe (53) gespeichert wird.

2. Bildeingabegerät gemäß Anspruch 1, wobei die Impulsdurchlaßeinrichtung ein Flip-Flop (52) enthält, das mit einem Impuls ($P_P$) der Lageabtasteinrichtung (30) gesetzt und mit einem Impuls ($P_R$) der Zeilenabtaster-Ansteuerstufe (51) zurückgesetzt wird.

3. Bildeingabegerät gemäß Anspruch 2, wobei der Ausgang (Po) des Flip-Flops (52) die Spalte oder Zeile eines Bildinformationssignals bestimmt, das in der Speicherstufe (53) gespeichert ist, und wobei der Impuls ($P_R$) der Zeilenabtaster-Ansteuerstufe (51) die Zeile oder Spalte des Bildinformationssignals bestimmt.

4. Bildeingabegerät gemäß Anspruch 2 oder 3, wobei ein 1/N-Frequenzteiler zwischen der Lageabtasteinrichtung (30) und dem Flip-Flop (52) vorgesehen ist.

5. Bildeingabegerät gemäß jedem der Ansprüche 1 bis 4, wobei die Lageabtasteinrichtung einen Abtaster (31, 32, 33) besitzt, um die Drehrichtung der Walze abzutasten.

6. Bildeingabegerät gemäß Anspruch 5, wobei die Lageabtasteinrichtung eine Schlitzscheibe (31), die auf der Welle der Walze befestigt ist, sowie zwei Drehabtaster (32, 33) aufweist.

7. Bildeingabegerät gemäß jedem der Ansprüche 1 bis 6, wobei Licht, das von der Lichtquelle (21) stammt und von der Bildinformationsfläche (Pd) reflektiert wird, über einen Linsenaufbau (24) auf den Zeilenabtaster (25) fokussiert wird.

8. Bildeingabegerät gemäß jedem der Ansprüche 1 bis 7, wobei das Gerät weiters eine Bremseinrichtung (41) besitzt, um die Walze (27) zu verriegeln.

9. Bildeingabegerät gemäß Anspruch 8, wobei das Gerät weiters eine lichtempfangende Einrichtung (22), um die Helligkeit des Lichts von der Lichtquelle (21) abzutasten, sowie eine Einrichtung (43) besitzt, um die Bremseinrichtung in jenem Augenblick freizugeben, an dem der Ausgang der lichtempfangenden Vorrichtung gleich einem vorgegebenen Wert ist.

10. Bildeingabegerät gemäß jedem der Ansprüche 1 bis 9, wobei die Speicherstufe eine Speicherkarte (64) ist.

11. Bildeingabegerät gemäß jedem der Ansprüche 1 bis 10, wobei das Gerät weiters eine Überwachungseinrichtung (63) enthält, um eine Information der Bildinformationsfläche darzustellen, die eingegeben wird.

EP 0 146 472 B1

# FIG.1

*51*

LINE SENSOR
DRIVING CIRCUIT

$P_R$

*30*

POSITION
DETECTOR

$P_P$

*52*

CK
CLR    D    o ⌐I⌐
Q

$P_O$

*53*

MEMORY

LINE SENSOR

*25*

A/D
CONVERTING
CIRCUIT

$V$

*54*

10

# FIG.2

# FIG.3

# FIG.4

# FIG.5

# FIG.6

# FIG.7

# FIG.8

OUTPUT

$l$

$O$ $t_0$ $t_1$ TIME

# FIG.9

(A)

$T$

(B)

(C)

(D)

(E)

S R S R S

# FIG.10

COMPRESSION RATIO

3

2

$l$

$O$ $\mathcal{V}_0$ $2\mathcal{V}_0$ $3\mathcal{V}_0$

SCANNING SPEED

# FIG.11